# EUROPÄISCHE PATENTANMELDUNG

(11) **EP 1 382 896 A2**
(43) Veröffentlichungstag der Anmeldung: **21.01.2004**
(21) Anmeldenummer: 03015333.2
(22) Anmeldetag: 07.07.2003
(51) Int. Cl.: F16L 59/20

(54) **Rohrverbindung an geschweissten Abgängen an Erdgasleitungen aus Stahl**

(30) Priorität: 11.07.2002 DE 10232144; 07.07.2002 DE 10230665; 16.11.2002 DE 10253653; 15.12.2002 DE 10258700; 22.04.2003 DE 10318474
(71) Anmelder: Stucke, Walter, 40878 Ratingen (DE)
(72) Erfinder: Stucke, Walter, 40878 Ratingen (DE)
(74) Vertreter: Kaewert, Klaus

(57) **Zusammenfassung**

Nach der Erfindung werden zum Nachisolieren von Abzweigungen an Erdgasleitungen Schrumpfmuffen verwendet.

## Beschreibung

Die Erfindung betrifft das Nachisolieren von Stahlrohrverbindung und geschweißten Abgängen an kunststoffisolierten Erdgasleitungen aus Stahl. Die Erdgasleitungen sind im Erdreich wie auch oberhalb des Erdreiches feuchtigkeitsbelastet. Deshalb rosten Erdgasleitungen aus Stahl. Zusätzlich kann es zu einer Elektrokorrosion kommen.

Die Erdgasleitungen sind insbesondere als Erdgasleitungen zum allergrößten Teil im Erdreich verlegt. Dort kommt es zu elektrischen Spannungen und zu Stromfluß bzw. zu Streuströmen. Zusammen mit der Feuchtigkeit im Erdreich und der Beschaffenheit des Erdreiches beinhaltet das eine große Korrosionsgefahr. Durch Korrosion kann es ohne weiteres zu einem Stahlabtrag am Stahlrohr von 9 bis 10 kg pro Jahr und zu Fehlerbereichen kommen. Die Leckagen sind dann absehbar. Bei Leckagen wird weniger der Verlust an Erdgas als die Explosionsgefahr z..B. an Erdgasleitungen als nicht tolerierbar angesehen.
Zur Vermeidung von Korrosion ist es deshalb üblich, Stahlrohre mit einer Isolierung zu versehen.

Stand der Technik für die Isolierung sind eine Vorbehandlung der zu isolierenden Rohrflächen und ein mehrschichtiger Isolierungsaufbau. Es wird ein zweischichtiger und ein dreischichtiger Isolierungsaufbau angeboten. Die bekannten Isolierungen haben sich insbesondere als 3-Schichten-Schutz bewährt.
Probleme entstehen nur dann, wenn die Isolierung bei der Montage verletzt wird. Die Verletzung kann aus mehreren Gründen entstehen. Bei der Montage/Schweißen müssen Stahlrohre aneinander gesetzt werden. Zum Schweißen werden die Rohrenden in einem ausreichenden Umfang von der Isolierung befreit. Nach dem Schweißen kommt es darauf an, die Schweißstelle ausreichend nachzuisolieren. Zum Nachisolieren werden die Schweißstellen behandelt und häufig mit Isolierungsbändern umwickelt. Es ist auch bekannt, Schrumpfmuffen zum Nachisolieren von Rohrstößen zu verwenden. Die Schrumpfmuffen werden vor dem Schweißen auf eines der zu verbindenden Rohrenden geschoben und zwar so weit, daß sie durch den Schweißvorgang nicht beschädigt werden. Nach dem Schweißen werden die Schrumpfmuffen über die Schweißstelle geschoben. Dabei wird eine ausreichende Überlappung mit der bestehenden Rohrisolierung gewahrt. Durch Erwärmung der Schrumpfmuffe mit offener Flamme tritt der Schrumpf ein. Die Schrumpfmuffe umschließt die beiden Rohre an dem Rohrstoß dicht.

Das Problem der Nachisolierung stellt sich nicht nur an den Rohrstößen bzw. Rohrverbindungen sondern auch an den sogenannten Abzweigung von Erdgasleitungen. Bei einem Hausanschluß an eine Erdgasleitung wird eine Leitung sehr viel kleineren Durchmessers mit der Erdgasleitung verbunden. Üblicherweise wird die Erdgasleitung im Anschlußbereich von der Isolierung befreit, ein ausreichendes Loch bzw. ausreichender Abgang in die Erdgasleitung eingebracht und ein Anschlußflansch bzw. Anschweißfitting als ein Teil der Anschlußleitung an die Erdgasleitung angeschweißt. Die Schweißstelle wird wiederum behandelt und danach mit den bekannten Bändern umwickelt. Die Erfindung geht davon aus, daß die bekannte Wickel- und Bänderisolierung nicht immer die optimale Isolierung ist. Die Erfindung hat auch erkannt, daß eine offene Flamme an der Kunststoffisolierung Probleme verursachen kann. Desgleichen kann das zum Reinigen von Stahlflächen und Rohrverbindungen eingesetzte Lösungsmittel Probleme verursachen. Das gilt auch für Voranstrich-Lack.

Zur Beseitigung obiger Probleme geht die Erfindung von der Überlegung aus, eine Schrumpfmuffe an der Verbindung von Leitungsrohr und Abzweigung einzusetzen. Vorzugsweise wird das mit einer Technik zum Abisolieren kombiniert, wie sie in der EP 0213061 beschrieben ist. Die bekannte Technik zum Abisolieren geht davon aus, daß bei mehrschichtiger Isolierung mit einer EP-Unterschicht nur eine Durchtrennung der Isolierung bis zur EP-Schicht erfolgt und daß die EP-Unterschicht in einem Überlappungsbereich mit der Nachisolierung verbleibt. Zwischen dem Überlappungsbereich und dem zu verschweißenden Rohrende ist eine vollständige Abisolierung des Stahlrohres vorgesehen, um die Schweißstellen für den Schweißvorgang frei zu machen.
Nach dem Schweißen folgt das Reinigen der Schweißstelle. Für das Reinigen kommen diverse Verfahren in Betracht. Das schließt mechanische Verfahren wie das beschriebene Bürsten und Sandstrahlen oder Strahlen mit Stahlkugeln ein.
Die gereinigte Fläche bietet eine ausreichende Haftung für die dichte Verbindung mit einer Schrumpfmuffe. Vorzugsweise ist darüber hinaus zwischen der gereinigten Stahlfläche und der Schrumpfmuffe ein Haftvermittler vorgesehen. Der Haftvermittler kann ein Kleber sein.

Wahlweise ist zusätzlich eine Lackierung der gereinigten Stahlfläche für die Haftvermittlung vorgesehen. Desgleichen kann eine Beschichtung mit einem EP-Pulver zur Haftvermittlung erfolgen, das dann auf der gereinigten Stahlfläche verschmolzen wird.

Die Aufbringung von pulverförmigem EP sieht vorzugsweise einen Korndurchmesser von 0,01mm bis 0,02 mm. Je kleiner der Korndurchmesser des Pulvers ist und je genauer die Aufschmelzung erfolgt, desto gleichmäßiger bildet sich eine EP-Schicht auf dem vollständig abisolierten Rohrende aus.
Zur Gleichmäßigkeit trägt auch die Art des Pulverauftrages bei.
Günstig ist es, das Pulver aufzustreuen und/oder aufzublasen. Dabei können Pulver und/oder Beschichtungsflächen vorgewärmt werden. Desgleichen kann mit einem erwärmten Trägergas zum Anblasen des EP-Pulvers gearbeitet werden. Trägergastemperaturen können zum Beispiel bis 60 Grad betragen.

Die Vorwärmtemperatur der Beschichtungsflächen kann wesentlich höher als die Vorwänntemperatur des Pulvers sein. Die Erwärmung der Beschichtungsflächen kann verschieden erfolgen. Günstig ist eine induktive Erwärmung.

Die Erwärmung des Pulvers kann allein vom Trägergas verursacht werden. Es kann auch eine davon unabhängige Erwärmung mittels geeigneter Heizstrecken erfolgen.

Aufgrund der Erwärmung des EP-Pulvers kann das EP-Pulver unmittelbar beim Auftreffen auf der Beschichtungsfläche kleben. Das Kleben der auftreffenden Pulverpartikel erleichtert die gleichmäßige Beschichtung.

Es kommen auch andere Beschichtungsverfahren für das Aufbringen des EP-Pulvers in Betracht.

Die Aushärtung des EP erfolgt dann abhängig von der Materialbeschaffenheit. Das gilt zumindest für das EP-Material. Darüber hinaus kann das Material der Schrumpfmuffe Berücksichtigung finden. Je nach EP-Material kann eine Glasübergangstemperatur von 65 bis 90 Grad Celsius maßgebend sein. Je nach Material hat die Schrumpfmuffe einen Erweichungspunkt, der zum Beispiel zwischen 111 und 160 Grad Celsius liegen kann. In Abhängigkeit von den beteiligten Materialien erfolgt die Aushärtung des EP. Die Aushärtetemperatur kann zwischen 130 und 200 Grad Celsius liegen. Bei geringerer Aushärttemperatur ist eine längere Aushärtzeit vorgesehen. Je nach Temperatur kann die Aushärtezeit zum Beispiel 30 min bis zu 2 min betragen. Darüber hinaus ist es von Vorteil, die Rohrenden bei geringerer Aushärtetemperatur auf größerer Länge zu überlappen. Die Überlappung kann zum Beispiel 100 bis 300 mm betragen.

Die Schrumpfmuffe übergreift in der Isolierstellung beide miteinander verbundene Rohrenden. Dabei erstreckt sich die Schrumpfmuffe vorzugsweise bis über den beim Abisolieren stehen gebliebenen EP-Streifen auf die vom Abisolieren unberührte Rohrisolierung.

Die Anwendung der Schrumpfmuffe beschränkt sich bisher nur auf gerade Rohrverbindungen Für Abzweigungen gibt es keine Schrumpfinuffen.

Nach der Erfindung ist für Abzweigungen eine Schrumpfmuffe vorgesehen, welche zumindest teilweise der Abzweigung angepaßt ist. Die Anpassung kann verschieden erfolgen:
Wahlweise wird dabei eine Schrumpfmuffe verwendet, die entsprechend groß ist und an der Stelle der Abzweigung mit einer Öffnung versehen ist, so daß die Schrumpfmuffe über die Abzweigung gezogen werden kann und die Abzweigung nach dem Schrumpf durch das Loch hindurch ragt. Dadurch erleichtert sich die Isolierung schon wesentlich. An der Abzweigung kann in herkömmlicher Wicklung ein Anschluß der Isolierung an die Schrumpfmuffe erfolgen.
   Die montierte Abzweigung kann danach gleichfalls mit einer als Schrumpfteil ausgebildeten Kappe oder dergleichen umschlossen werden.
Wahlweise wird eine T-förmige Schrumpfmuffe verwendet, die an der Stelle der Abzweigung nicht nur das Loch sondern zusätzlich einen der Abzweigung bzw. dem Anschweißfitting nachgebildeten Rohrstutzen aufweist. Die Schrumpfmuffe wird wie die zuvor erläuterte Schrumpfmuffe gehandhabt, kann aber sowohl die Erdgasleitung als auch die Abzweigung umschließen.
Wahlweise umfaßt die Schrumpfmuffe auch nur die Abzweigung. Dann kann in herkömmlicher Wicklung mit Isolierungsbändern ein Anschluß der Isolierung an das Leitungsrohr erfolgen.

Sofern die Abzweigung beim Neubau der Erdgasleitung geplant ist, kann die Schrumpfmuffe auf das entsprechend vorbereitete Stahlrohr der Erdgasleitung gezogen werden. Wie oben beschrieben, erfolgt die Vorbereitung der Erdgasleitung durch Einbringen einer Öffnung in die Stahlleitung und durch Anschweißen eines Stahlflansches für die Abzweigung. Vorzugsweise erfolgt vor dem Schweißen und nach dem Schweißen eine Reinigung der Schweißflächen. Eine vorteilhafte Reinigung erfolgt mit Stahlstrahlung. Die Stahlstrahlung unterscheidet sich von der Sandstrahlung durch die Verwendung von Stahlkugeln anstelle von Sand.

Die Schrumpfmuffe wird anschließend über die Abzweigung und über die Schweißstellen gezogen und geschrumpft. Vorteilhaft ist, wenn die Schrumpfmuffe sich mit der Kunststoffisolierung überlappt. Das Überlappungsmaß beträgt vorzugsweise mindestens 10mm und vorzugsweise höchstens 50mm. Das Überlappungsmaß wird bei schräg verlaufenden oder bogenförmig verlaufenden Schnitten in der Kunststoffisolierung vom Schnittrand am Außenmantel an gerechnet.

Alternativ kann die Schrumpfmuffe vor dem Verschweißen über die Abzweigung geschoben werden. Zum Verschweißen der Rohrstöße werden die Enden der Schrumpfmuffe zurückgeschoben, um eine Beschädigung durch Schweißen zu verhindern. Nach dem Verschweißen können die Schrumpfenden wieder vorgeschoben werden und kann der Schrumpf beginnen.

Wahlweise ist auch ein Schweißen der Rohrenden unter der Schrumpfmuffe möglich. Dazu sind die Schrumpfmuffen dann mit Abstandshaltern oder Spreitzern versehen. Der Abstandshalter und Spreitzer gewährleistet während der Erwärmung der Schweißflächen einen ausreichenden Abstand der Schrumpfmuffe, um eine Beschädigung durch die Schweißwärme zu vermeiden. Günstig ist dabei eine Elektroschweißung, weil die Elektroschweißung sehr viel geringe Wärmebelastungen für die Umgebung frei setzt.

Die Schrumpfmuffen können einstückig sein oder aus einem oder mehreren Teilen zusammengesetzt werden.
Wahlweise können auch mehrere Schrumpfmuffen zu einer Gesamtschrumpfmuffe zusammengesetzt werden. Dabei ist vorzugsweise eine schlauchartige Schrumpfmuffe vorgesehen, die an der Erdgasleitung in Leitungslängsrichtung den gesamten Nachisolierungsbereich überdeckt. Vorzugsweise ist zusätzlich eine Überlappung der schlauchartigen Schrumpfmuffe mit der Kunststoffisolierung auf den Rohren vorgesehen. Die Überlappung beträgt vorzugsweise mindestens 10mm und vorzugsweise höchstens 50mm.

Im Bereich der Abzweigung ist die Schrumpfmuffe in der oben beschriebenen Form gelocht. Diese Schrumpfmuffe wirkt vorzugsweise mit einer weiteren topfartig ausgebildeten Schrumpfmuffe zusammen, die über den Anschlußflansch oder Anschlußstutzen der Abzweigung gezogen werden kann und mit der anderen Schrumpfmuffe verbunden werden kann. Dabei kann die topfartige Schrumpfmuffe einen Kragen besitzen, mit dem sie unter die andere Schrumpfmuffen greifen kann oder auf der anderen Schrumpfmuffe aufliegen kann.

Vorzugsweise findet eine Klebeverbindung zwischen der Schrumpfmuffe und der Erdgasleitung bzw. mit der Abzweigung statt. Der Kunststoff der Schrumpfmuffe kann so gewählt werden, daß ohne Hilfsmittel eine Klebefähigkeit, ggfs. erst nach Erwärmung eine Klebefähigkeit entwickelt.
Vorzugsweise ist die Schrumpfmuffe innenseitig mit einer Kleberschicht versehen. Es handelt sich um einen Schmelzkleber.

Die einstückige Ausbildung ist günstig für einen Neubau von Erdgasleitungen.

Bei nachträglichem Anbringen einer Abzweigung kann die Anbringung einer Schrumpfmuffe einfacher werden, wenn die Schrumpfmuffe aus einem oder mehreren Teilen um die Abzweigung herum zusammen gesetzt wird. Die Schrumpfmuffe kann an den Nahtstellen verschweißt oder verklebt oder auch mechanisch verbunden werden. Darüber hinaus ist es von Vorteil, eine Verklebung der Schrumpfmuffen oder von Schrumpfmuffenteilen mit dem Stahlleitungsrohr bzw. mit dessen Isolierung oder eine Verklebung mit der Abzweigung bzw. mit dessen Isolierung vorzusehen. Durch die Verklebung werden die Schrumpfmuffen schließend zur Anlage an die korrosionsgefährdeten Flächen des Leitungsrohres gebracht.

Dadurch wird die Luft an den Flächen des Leitungsrohres verdrängt, von der die Korrosionsgefahr ausgeht.

Die Schrumpfmuffenteile können Schlauchstücke und/oder Manschetten und/oder Hauben und/Kappen und/oder Stutzen oder dergleichen sein.

Wahlweise werden die Schrumpfmuffen noch zusätzlich durch bekannte Klebestreifen gesichert.

Die Schrumpfmuffe besteht vorzugsweise aus Polyethylen (PE) und/oder Polypropylen (PP) oder einer Kunststoffmischung mit wesentlichen PE- und/oder PP-Mischungsanteilen. Das Polyethylen besitzt eine vorzugsweise eine Dichte von mindestens 0,926 Gramm pro Kubikzentimeter. Das gleiche gilt für die das Polypropylen. Außerdem hat das Polyethylen vorzugsweise eine Mindestdicke von 1 mm im aufgeschrumpften Zustand und ist vorzugsweise an der Berührungsfläche mit dem Stahlrohr bzw. an der Berührungsfläche mit der Abzweigung verklebbar. Im weiteren wird nur auf PE Bezug genommen. Das schließt hier die alternative oder zusätzliche Verwendung von PP ein.

Die Klebefähigkeit kann sich auf Schrumpfmuffenteile beschränken. Wahlweise ist nur der mit dem Anschlußflansch bzw. Anschlußstutzen korrespondierende Schrumpfmuffenteil klebefähig.
Bei der Klebung kann ein zusätzlicher Kleber zum Einsatz kommen. Vorzugsweise ist die Schrumpfmuffe aber selbst klebend, insbesondere nach Erwärmung auf Schrumpftemperatur. Die Erwärmung erfolgt wahlweise mit Warmluft. Die Warmluft kann elektrisch oder durch Verbrennung oder mit einer anderen Heizeinreichtung erzeugt werden. Vorzugsweise wird eine offene Flamme an der Kunststoffisolierung vermieden. Die Erwärmung kann auch durch Strahlung oder durch Berührung mit anderen Heizmitteln erzeugt werden.

Die richtige Erwärmung wird vorzugsweise mit einer Temperaturanzeige kontrolliert. Besonders günstig sind Materialien, deren Farbe bei Erreichen der gewünschten Temperatur umschlägt. Vorzugsweise werden dabei organische Farbstoffe mit Großmolekülen verwendet. Dem liegt folgender Vorgang zugrunde:
Bei Erreichen der Temperaturgrenze in Anwesenheit von Sauerstoff wird das Großrnolekül gespalten. Es entsteht ein Substitutionsprodukt mit anderen Farben. Solche Temperaturgrenzen können z.B. bei 45 Grad Celsius oder 80 Grad Celsius liegen.
Die Farbänderungen erfolgen z.B. von gelb nach rot und violett oder von violett über grün nach gelb.
Solche organischen Farben sind wegen ihrer Instabilität sonst wirtschaftlich unbedeutend. Wahlweise findet eine instabile Farbschicht aus Anwendung, deren Instabilität bei 40 bis 80 Grad Celsius liegt.

Wahlweise besteht die instabile Farbschicht aus einem Polyisobuthylen. Je nach Beschaffenheit des Polyisobuthylens ist die Instabilitätstemperatur anders. Im wesentlichen ist dabei das Molekulargewicht (Mol-Gew) maßgebend. Das Molekulargewicht (auch als Molekularmasse bezeichnet) ist die Masse eines Moleküls, bezogen auf das Kohlenstoffkotop ¹²C. Vorzugsweise werden Mischungen mit mindestens einem Polyisobuthylen und einem Polyisobuthylen anderen Molekulargewichts verwendet. Dabei ist der Abstand beider Gewichte mindestens 10.000 D (Einheit Dalton), vorzugsweise mindestens 30.000 D und noch weiter bevorzugt mindestens 50.000 D. Dabei kann das eine Polyisobuthylen so gewählt werden, daß seine Instabilitätstemperatur unterhalb der Schrumpftemperatur liegt, während die andere Instabilitätstemperatur so ausgewählt werden kann, das seine Instabiltätstemperatur über der Schrumpftemperatur an der Grenze der Warmfestigkeit des PE liegt. Es kann auch ein Polyisobuthylen mit einer Instabilitätstemperatur gewählt werden, die anderen Funktionen genügt.

Wahlweise kann die Farbschicht zugleich eine Klebeschicht bilden.
Im Schadensfall kann die Muffe geöffnet und kontrolliert werden, ob die erforderlichen Temperaturen eingehalten worden sind und ob eine ausreichende Dichtwirkung entstanden ist. Bei Leckagen hat der Luftsauerstoff Zutritt zu dem Schmelzkleber. Desgleichen ist bei mangelnder Spülung ein Restsauerstoff im Bereich des Schmelzklebers vorhanden und kann in Reaktion mit dem Sauerstoff eine Farbänderung entstehen, welche die Undichtigkeit anzeigt. Hier ist die Auslegung der Instabilitätstemperatur auf die Schrumpfungstemperatur bzw. auf die Temperatur des Spülgases zweckmäßig.

Zum Beispiel entsteht eine Farbschicht, die zugleich Klebeschicht ist, durch Zumischung von Hartparaffin und Balsamharz. Eine geeignete Mischung kann swie folgt zusammengesetzt sein:
Polyisobuthylen (50.000 Mol.Gew) mit 30 bis 70 Gew%
Polyisobuthylen (10.000 Mol.Gew) mit 30 bis 55 Gew%
Hartparaffin (mit einem Schmelzpunkt von 80 Grad Celsius) mit 10 Gew%
Balsamharz (Kolophonium mit einem Schmelzpunkt von 105 Grad Celsius) mit 5 Gew%
Die oben beschriebenen Gew% beziehen sich auf die Gesamtmischung.

In der Mischung bildet das Hartparaffin ein Gleitmittel.
Das Balsamharz erhöht die Haftwirkung des Klebers.
Mit der oben beschriebenen Mischung lassen sich Haftwerte erreichen, wie sie in DIN-EN 10285 für einen 3-Schichtenschutz gefordert werden.

Es können auch Schrumpfmuffen mit Kaltklebefähigkeit eingesetzt werden. Dann fällt die Gefahr von Schäden aus übermäßiger Erwärmung weg.
Bei Kaltklebefähigkeit werden die Schrumpfmuffen vor dem Einsatz mit einer Trennfolie/Schutzfolie an den Klebeflächen versehen, die bei dem Einsatz entfernt wird.

Im übrigen ist beim Setzen der Schrumpfmuffen von Vorteil, wenn der Innenraum zwischen Schrumpfmuffen und Stahlrohr bzw. Abzweigung vor dem Schrumpf evakuiert und/oder während des Schrumpfes mit einem Gas inertisiert wird.

Bevorzugtes Inertisierungsmittel ist trockenes Stickstoffgas. Vorzugsweise wird die Luft mit dem Inertgas bzw. Schutzgas ausgespült.
Durch Evakuieren und/oder Spülen wird verhindert, daß die Schrumpfmuffe Korrosionspartner des Stahles einschließt. Korrosionsgefahr geht dabei besonders von Luft aus.
Zur Kontrolle ausreichender Spülung kann in das austretende Spülgas eine offene Flamme gehalten werden. Bei Erlöschen der Flamme kann von einer ausreichenden Spülung ausgegangen werden.

Wahlweise wird der oben beschriebene Spülvorgang mit der Erwärmung der Schrumpfmuffe kombiniert. Dazu wird das Spülgas vor dem Eindringen auf die Schrumpftemperatur erwärmt. Das kann z.B. mit Hilfe eines geeigneten, beheizten Wärmetauschers erfolgen, durch den das Spülgas hindurchgeleitet wird. Die Beheizung des Wärmetauschers kann wie oben beschrieben erfolgen.

Wahlweise wird die Schrumpfung gesteuert, so daß z..B. zuerst an den Muffenenden eine Schrumpfung einsetzt und die Schrumpfung sich dann zur Muffenmitte hin fortsetzt.
Oder es wird die Schrumpfung so gesteuert, daß die Schrumpfung erst in der Muffenmitte einsetzt und sich dann zu den Muffenenden fortsetzt.
Oder es wird die Schrumpfung so gesteuert, daß sie an einem anderen Punkt einsetzt und sich in andere Richtungen fortsetzt.
Die Steuerung kann dadurch erleichtert werden, daß an der Schrumpfmuffe mehrere Zuleitungen und/oder mehrere Ableitungen für das erwärmte Spülgas vorgesehen sind, so daß das erwärmte Spülgas zunächst an den Stellen eingetragen werden kann, an denen der Schrumpfvorgang beginnen soll, und daß das erwärmte Spülmittel anschließend an den Stellen zugeleitet werden kann, an denen der Schrumpfvorgang mit Verzögerung einsetzen soll.
Günstig ist, wenn zu den verschiedenen Zuleitungen und/oder Ableitungen verschiedene Leitungen führen, in den Schieber angeordnet sind, mit denen eine schnelle und einfache Umleitung des erwärmten Spülgases stattfinden kann.

Die Steuerung des Schrumpfvorganges kann auch ganz oder teilweise durch unterschiedliche Erwärmung bzw. unterschiedlich warmes Spülgas bewirkt werden.

Bei einer Temperaturregelung an dem für die Erwärmung des Spülgases vorgesehenen Wärmetauscher kann die oben beschriebene Anwendung eines Temperaturanzeigers an der Schrumpfmuffe entbehrlich machen. Unabhängig davon behält das Farbmaterial als Dokumentation richtigen Schrumpfens eine wesentliche Bedeutung, wenn ein Farbmaterial verwendet wird, das nach Überschreiten der Instabilitätsgrenze nicht mehr die ursprüngliche Farbe annimmt, wenn es sich wieder abkühlt.

Zum Spülen sind entsprechende Eintrittsöffnung und Austrittsöffnungen an den Schrumpfmuffen vorgesehen. Die Öffnungen zum Spülen können an entfernten Stellen angeordnet sein. Die Öffnungen können auch in geringer Entfernung angeordnet werden. Vorzugsweise finden sich Eintrittsöffnung am untersten Umkehrpunkt bzw. an der Unterseite der Schrumpfmuffe und die Austrittsöffnungen am höchsten Einbaupunkt bzw. am Scheitel der Schrumpfmuffe. Soweit die Abzweigung den höchsten Punkt oder untersten Punkt bildet, ist dort eine Austrittsöffnung bzw. eine Eintrittsöffnung an der Schrumpfmuffe vorgesehen.

Bei liegender Abzweigung sind die Öffnungen wahlweise an dem zur Abzweigung gehörigen Schrumpfmuffenteil und/oder an dem zur Erdgasleitung gehörigen Schrumpfmuffenteil vorgesehen.

Günstig ist, wenn durch den Schrumpf der Schrumpfmuffe und wahlweise durch zusätzliches Andrücken der Schrumpfmuffen bzw. Schrumpfmuffenteile das eingeschlossene Gas ausgetrieben wird. Durch Evakuieren der Schrumpfmuffe bzw. durch Evakuieren des Zwischenraumes zwischen der Schrumpfmuffe und dem Leitungsrohr bzw. des Zwischenraumes zwischen der Schrumpfmuffe und der Abzweigung kann der aus anstehende Luftdruck zum Andrücken genutzt werden. Ein durch Unterdruck von 0,7 bis 0,9 bar entstehender äußerer Druck bewirkt eine sichere Anlage der Schrumpfmuffe an der Abzweigung.

Vorteilhafterweise kann die Dichtwirkung der Schrumpfmuffe, insbesondere die Dichtwirkung an den Manschetten/Stutzen-Enden der Schrumpfmuffe durch fortdauerndes Anliegen eines Unterdruckes kontrolliert werden. Dabei kann von einer ausreichenden Dichtwirkung ausgegangen werden, wenn der angeliegende Unterdruck sich ohne fortschreitende Saugung nicht mehr als ein zulässiges Maß verändert. Das zulässige Maß läßt sich mit wenigen Versuchen bestimmen.

Der Anschluß für die Spülgasleitung und/oder für das Evakuieren kann durch geeignete Rohrstutzen gebildet werden. Günstig sind Rohrstutzen an der Schrumpfmuffe, die eine Klemmverbindung oder auch eine Schraubverbindung erlauben. Solchermaßen vorbereitete Anschlüsse verkürzen die Arbeitszeit für die Schrumpfverbindung erheblich, so daß ihr baulicher Aufwand weit überkompensiert wird.

Für den Anschluß der Spülgasleitung können auch einfache Öffnungen an den Schrumpfmuffen vorgesehen sein. In die Öffnungen können die Spülgasleitungen gesteckt werden.
Desgleichen können die Evakuierungsleitungen mit geeigneten Öffnungen in den Schrumpfmuffen zusammen wirken.
Wahlweise handelt es sich bei den Öffnungen auch um Schlitze.

Nach dem Spülen und/oder Evakuieren werden die Stutzen, Öffnungen und dergleichen geschlossen, um ein Eindringen von Korrosionspartnern zu verhindern.
Bei den beschriebenen Stutzen läßt sich ein Verschluß ebenso leicht und schnell bewirken wie beim Anschluß der Leitungen.
Bei den Öffnungen, auch bei den Schlitzen, sind vorzugsweise geeignete Lappen an den Schrumpfmuffen vorgesehen, mit denen sich die Öffnungen abdecken lassen. Die Lappen werden dann auf den Öffnungen verklebt oder verschweißt.
Mit den Lappen und Schlitzen entsteht an den Schrumpfmuffen eine Bauweise, die einem Briefverschluß ähnlich ist.

Vorzugsweise werden die Stutzen und die Schlitze vor dem Schließen mit einem Dichtmittel gefüllt. Besonders geeignete Dichtmittel sind dabei Kleber.

Die Qualität und Wirtschaftlichkeit bestimmen die Nachisolierung. In dem Rahmen sind Dichte und Erweichungspunkt des gewählten PE- oder PP der Stahlrohrisolierung maßgebend. Das gleiche gilt für die Aushärtungstemperatur und Aushärtungszeit des ausgewählten EP(Epoxyharz)-Pulvers in der Anwendung. Die Qualität des EP-Pulvers in der Glasübergangstemperatur ist für den vorgesehenen Einsatz entscheidend bzw. bestimmt den Unterrostungsweg an Schnitt- oder Verletzungskanten im EP und den damit verbundenen Widerstand gegen Streuströme und den Boden-Chemie-Angriff.
Die Qualität der Nachisolierung bestimmt die Nutzungszeit des gesamten Rohrsystems.

Über der EP-Schicht liegen die weiteren Schichten PE-Kleber und PE/PP bzw. anderen Thermoplasten. Als andere Thermoplaste kommen z.B. LDPE (PE geringer Dichte), MDPE und HDPE (PE hoher Dichte) in Betracht.

Aus dem Gesamtsystem ergibt sich die Dichtungswirkung der Isolierung gegen
Wasser, Sauerstoff und Kohlendioxid sowie gegen
Mechanische Belastungen aus Erdbewegungen, Grundwasser und Verkehrslasten.

Als besonders günstig haben sich EP-Pulver mit einem Aushärtungsbereich von 130 bis 200 Grad Celsius, vorzugsweise 160 bis 180 Grad Celsius, erwiesen. Die Aushärtungszeit verringert sich mit zunehmender Aushärtungstemperatur. Während bei 130 Grad Celsius noch mit 30 min Aushärtungszeit gerechnet werden kann, verringert sich die Aushärtungszeit bei 150 Grad Celsius Aushärtungstemperatur auf 10 min. Bei 160 Grad Celsius kann eine Aushärtungszeit von 5 min ausreichend sein, bei 180 Grad Celsius eine Aushärtungszeit von 2 min.

Die Nachisolierungslänge der Rohrverbindung beträgt bei obigen Beispielen vorzugsweise 100 mm bis 300 mm in axialer Richtung

In der Zeichnung ist ein Ausführungsbeispiel der Erfindung dargestellt.

Blatt 1 zeigt im Ausschnitt eine Erdgasleitung 200 aus Stahlrohr mit einer Kunststoffisolierung. Die Einzelheiten sind in Blatt 2 dargestellt. Dort ist das Stahlrohr mit 1 bezeichnet, die Kunststoffisolierung mit 3. Die Kunststoffisolierung 3 besteht aus einer Schicht 3a aus PE und aus einer Schicht 3b aus Epoxyharz (EP) innen am Stahl und einer Hartkleberschicht 3c.

Blatt 3 zeigt eine Rohrstelle A für eine Abzweigung. Vor dem Abzweigen ist an dem Rohr an der Abzweigstelle A umlaufend auf einer Länge von 300m, beiderseits der Abzweigstelle 150mm, die Kunststoffisolierung mit einem Schrägschnitt unter einem Winkel von 30 Grad bis auf die EP-Schicht durchtrennt worden und abgeschält worden. Die Verfahrensweise entspricht der Verfahrensweise, wie sie in der EP 213061 beschrieben ist.
Anschließend ist die dadurch frei liegende EP-Schicht an jedem Rohrende auf einer Rohrlänge von jeweils 150mm entfernt worden.
Für eine Abzweigung wird auf die frei gelegten Rohrmantel flächen ein Rohrstutzen aufgeschweißt. Der Rohrstutzen hat einen Innendurchmesser nach DIN im Ausführungsbeispiel von 150 mm. In anderen Ausführungsbeispielen ist der Durchmesser kleiner als der Leitungsrohrdurchmesser.

Die dargestellten Schnittflächen des Rohrstutzens sind mit 5 und 6 bezeichnet. Die Schweißnähte anbesitzen dabei ausreichenden Abstand zur Kunststoffisolierung, um eine Beschädigung der Kunststoffisolierung zu verhindern. Die Situation ist im Blatt 5 dargestellt. Zugleich ist in Blatt 5 dargestellt, daß für die Abzweigung ein Loch bzw. Abgang zum Anschlußstutzen in das Leitungsrohr eingebrannt worden ist.

Blatt 7 zeigt, daß beiderseits des Rohrstutzens Stulpen 7 und 8 aus schrumpffähigem PE auf die Rohr aufgeschoben worden sind. Das Aufschieben ist vor dem Verschweißen des Rohrstutzens und beim Verlegen des Rohres erfolgt. Vor dem Einschneiden und Abschälen der Kunststoffisolierung sind die Stulpen 7 und 8 in die Position beiderseits der Abzweigstelle gebracht worden. Nach dem Verschweißen des Rohrstutzens können die Stulpen 7 und 8 bis an die Wände 5 und 6 zurückgeschoben werden.
In der Stellung nach Blatt 7 werden die Stulpen 7 und 8 geschrumpft, so daß der Rohrstutzen von den Stulpen 7 und 8 eingeschlossen sind. Dies ist in Blatt 8 dargestellt. Der Rohrstutzen ist nach Blatt 9 mit einem Deckel 9 versehen. Der Deckel 9 ist mit einer Schrumpfhaube 9a überzogen.

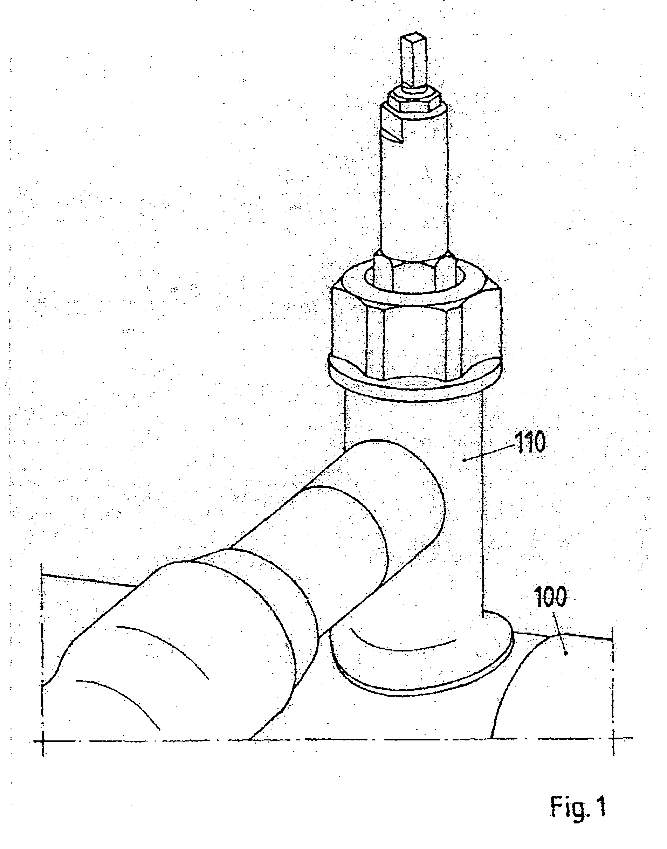

Der Deckel 9 und der Rohrstutzen symbolisieren im Ausfuhrungsbeispiel ein Abzweigung mit einem Ventil 110 , wie es in Fig. 1 an einer Leitung 100 dargestellt ist.

Die Abzweigung besitzt einen Sattelflansch. Mit dem Sattelflansch ist die Abzweigung mit der Leitung 100 verschweißt.

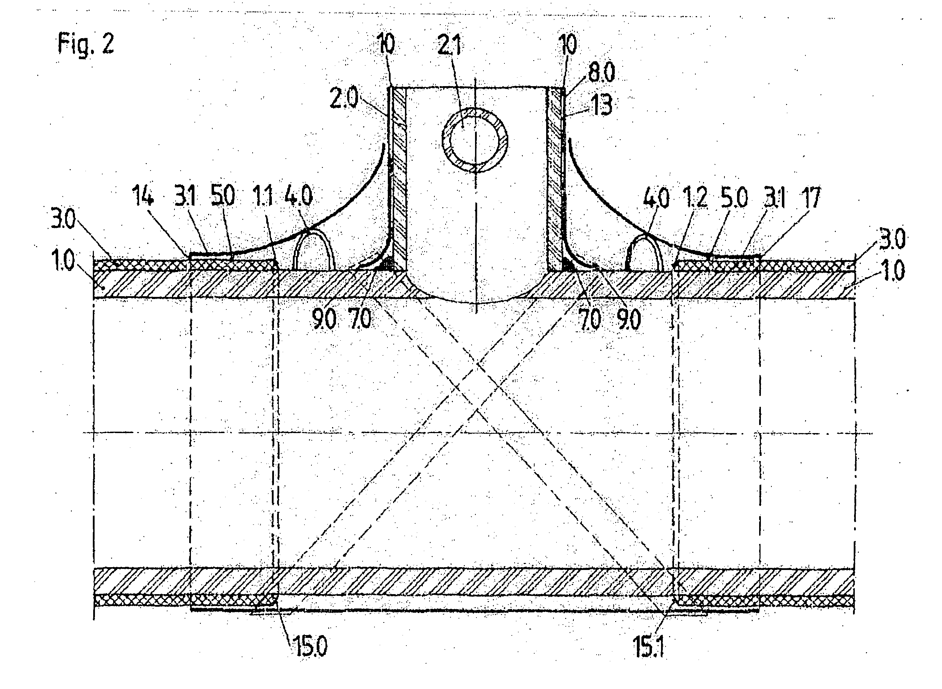

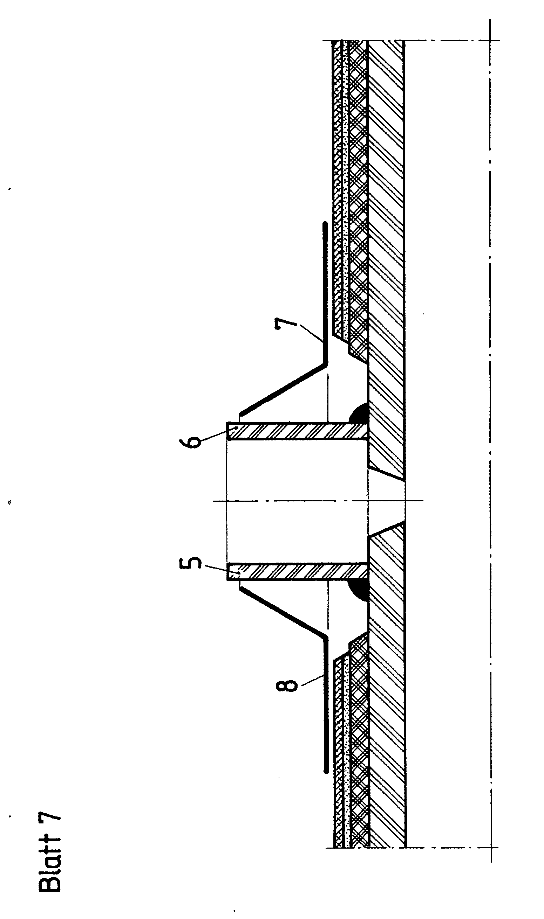

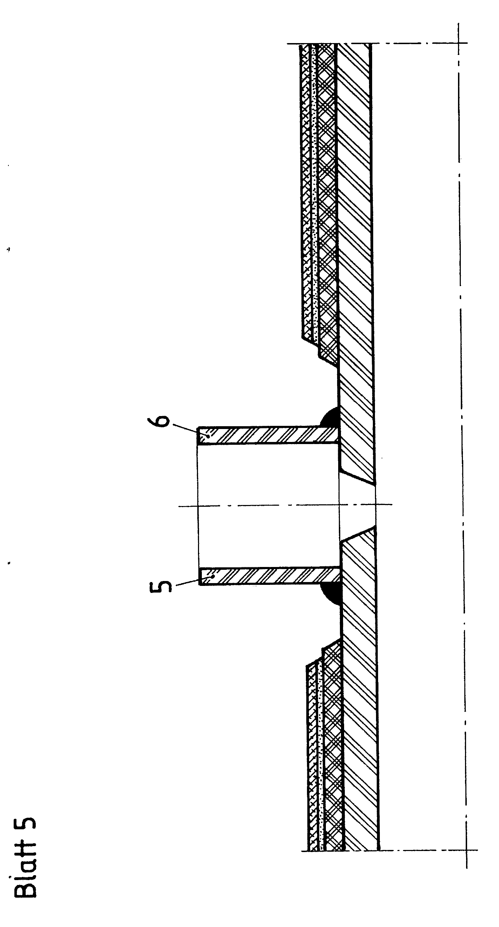

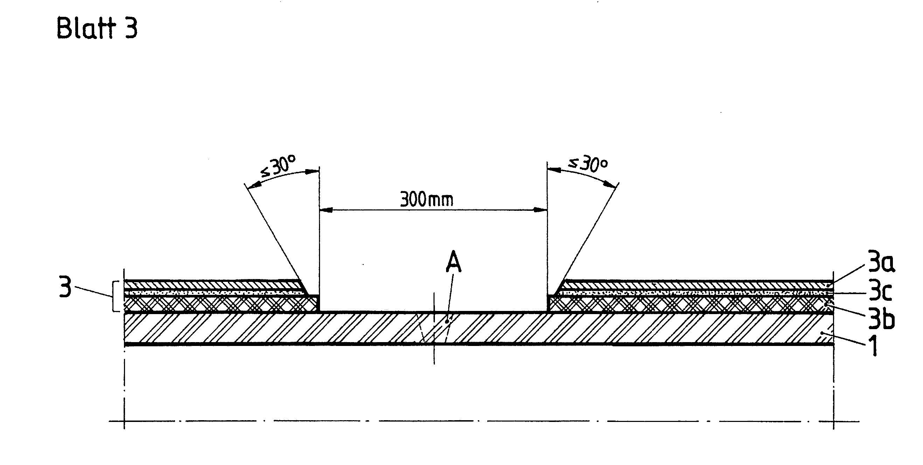

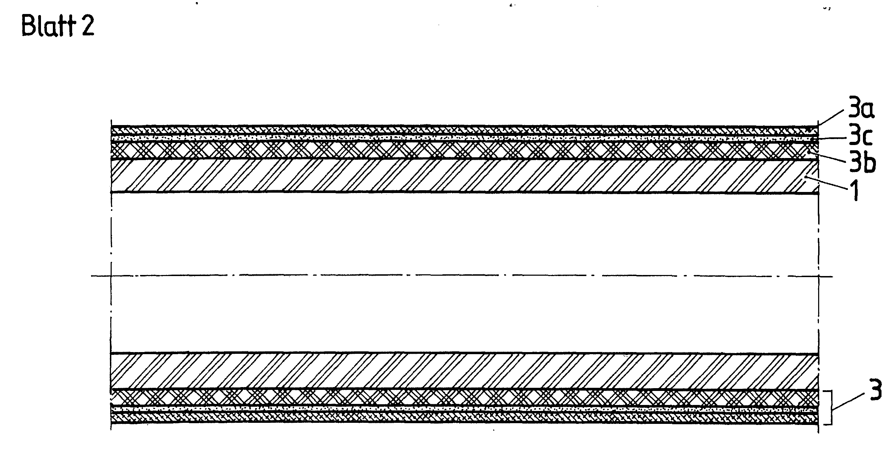

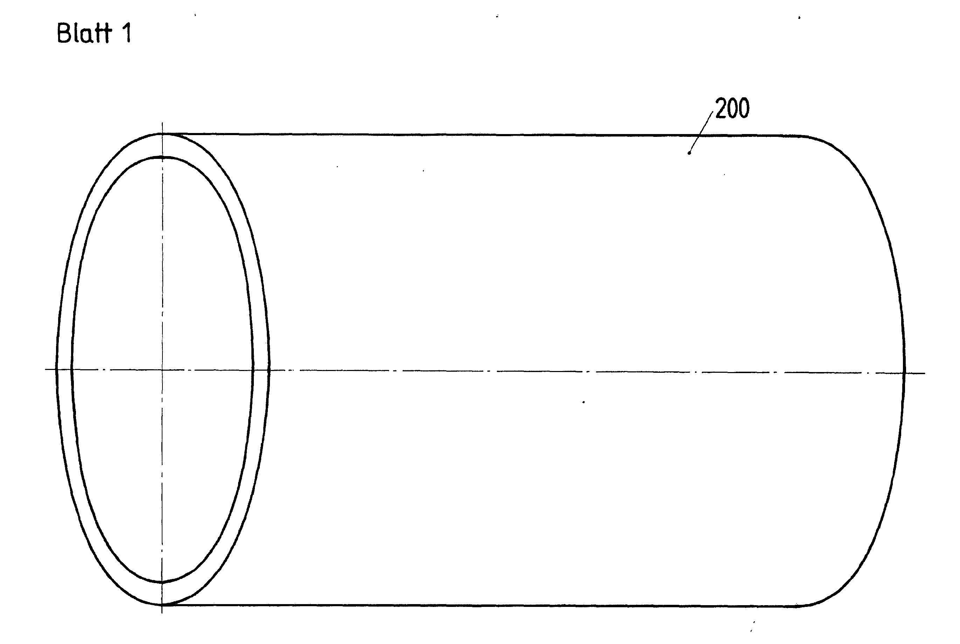

Fig. 2 zeigt ein anderes Ausführungsbeispiel:
Nach Fig. 2 ist eine gelochter Schrumpfmuffe 3.1 für die Nachisolierung der Abzweigstelle eines Hausanschlusses an einer Erdgasleitung vorgesehen. Die Schrumpfmuffe 3.1 besitzt mechanische Abstandhalter 4.0 zum Stahlrohr hin. Die Abstandshalter erlauben ein Einschweißen eines Anschlußflansches 2.0 der Abzweigung ohne Beschädigung der Schrumpfmuffe 3.1.
Die Schrumpfmuffe 3.1 besitzt ein geschnittes Loch 1.1-1.2. Das geschnittene Loch 1.1-1.2 nimmt den Flansch 2.0 der Abzweigung für den Hausanschluß an der Erdgasleitung auf. Die Schrumpfmuffe 3.1 wird von den Abstandhaltern/Spreitzern von dem Stahlrohr im Abstand gehalten. Die Gesamtlänge der Nachisolierung beträgt im Ausführungsbeispiel 400 mm. Dabei findet im Ausführungsbeispiel eine Überlappung mit der Rohrisolierung statt. Die Überlappung beträgt im Ausführungsbeispiel 50 mm(1.1 bis 3.1). Die Überlappung bewirkt, daß die nach Patent Nr. EP 213061 entstandenen Schnittflächen der Rohrisolierung bei 15 und 15.1 überdeckte werden.
Der Flansch 2 wird mit einer weiteren Schrumpfmuffe 8 umgeben.

Bei der Nachisolierung wird wie folgt verfahren:
1. Das Stahlrohr 1.0 wird von der Korrosionsschutzisolierung aus Polyäthylen, aus Kleber und Epoxidgrundschicht 3.0 über ca. 300 mm Rohrlänge wegen auftretender Schweißwärme beim anschließenden Einschweißen eines Flansches für die Abzweigung entmantelt und mit Drahtbürsten gesäubert. Dabei wird im Ausführungsbeispiel das werkseitig erstellte Oberflächen- Strahlgebirge von ca. 0,05 mm mittlerer Rauhtiefe erhalten, d.h. die bei der Rohrherstellung entstandene Oberflächenrauhigkeit wird erhalten.
2. Der Entmantelungsvorgang beginnt an den Linien 1.1 und 1.2 bzw. 15 und 15.1 mit einem umlaufenden Schnitt, wie er im Patent EP 213061 beschrieben ist. Dabei darf die Epoxidharzgrundschicht nicht durchschnitten werden. Der Schnitt verläuft unter einem Winkel zur Rohrlängsachse, der kleiner oder gleich 30 Grad ist. Dabei handelt es sich um einen geometisch geformten, umlaufenden Schnitt oder aber um einen flach-auslaufenden Korbbogenschnitt unter einem gleichen Winkel.
   Der axiale Längsschnitt in der Abmantelungsfläche wird ebenso durchgeführt, ohne die Stahlrohroberfläche im gestrahlten Stahloberflächen-Gebirge des Rohres zu verändern.
3. Danach erfolgt die Durchtrennung des Leitungsrohres für den Hausanschlußrohr-Abgang, die Abzweigung.
4. Vor dem Verlegen des Stahlrohres wird die gelochte Schrumpfmanschette 3.1 auf das Rohr gestülpt/geschoben. Die Schrumpfmanschette dient dem Nachisolieren der Freifläche von den Linien 1.1 bis 1.2 bzw. 15 bis 15.1. Dort wird die Manschette 3.1 in Position gebracht und mit einem Spreitzwerkzeug 4.0 einseitig im Scheitel des Stahlrohres vor dem Anschweißen des Flansches 2.0 an dem Rohr 1.0 ein Abstand der Manschette zum Rohr gesichert. Dadurch wird verhindert, daß die Manschette beim Anschweißen des Flansches 2.0 an dem Rohr 1.0 verklebt oder verbrennt.
   Zusätzlich kann eine wärmedämmende Isolierkordel in dem Hohlraum zwischen der Manschette und dem Rohr um das Rohr gewickelt werden. Das schützt bei dem Verschweißen vor der Wärmebelastung und vor Funkenflug. Nach dem Verschweißen wird die Isolierkordel wieder entfernt.
5. Das Verschweißen erfolgt durch elektrische Rundschweißung des Flansches über dem Loch bzw. Abgang für die Abzweigung des Hausanschlusses. Beim Schweißen halten die Abstandshalter die Schrumpfmuffe in ausreichendem Abstand von den Schweißflächen, so daß dort keine unzulässige Wärmebelastung auftritt.
6. Nach dem Schweißen folgt die Abkühlung der Schweißnaht an der Luft und die Entgratung der Schweißnaht. Gleichzeitig wird die angrenzende Stahlrohroberfläche durch Bearbeitung mit einer Drahtbürste wieder aufgerauht, um den Schrumpfmuffen-Verklebungsvorgang in den Positionen 7.0 und 8.0 zwischen den Positionen 1.1 bis 9.0 und 1.2 bis 7.0 zu begünstigen. Ebenso wird die Verklebung des schrumpffähigen Formteile 8.0 durch Aufrauhung in der Endposition begünstigt.
7. Nach der Bearbeitung der zugänglichen Stahlrohroberfläche werden die Abstandshalter 4.0 zwischen den Positionen 3.1 und 5.0 sowie 3.1 und 4 entfernt, bevor die Verklebung der Flächen 1.1 bis 3.1 bzw. 1.2 bis 3.1 beginnt.
8. Die Verklebungen beginnen im Ausführungsbeispiel mit dem schrumpffähigen Formteil 8.0 als Schrumpftopf für den Flansch der Abzweigung in der Position 7.0. Erst dann wird die gelochte Schrumpfmuffe für das Stahlrohr positioniert.
9. wie oben beschrieben, ist der Formteil 8.0 auf den Flansch 2.0 der Abzweigung gestülpt und an den Flächen 7.0 und 9.0 auf der Schweißnaht und dem Stahlrohr durch Warmluftbeaufschlagung von außen aufgeschrumpft und aufgeklebt worden. Dabei ist das Formteil 8.0 selbst aktiv im Schrumpf und im Kleben.
10. Dann wird die Nachisolierung mit der weiteren Schrumpfmuffe am Stahlrohr fortgesetzt.
11. Die Übergänge der Schrumpfmuffe 3.1 auf dem Stahlrohr besitzen 50 mm Länge beidseitig von 1.1 bis 3.1 Ende. In dem Bereich sind die Stahlrohrflächen aufgerauht. Zum Aufrauhen reicht ein Schmirgelleinen. Das Aufrauhen begünstigt die Verklebung der Schrumpfmuffe 3.1.
12. Der Schrumpf wird nach Entfernen der Abstandshalter und nach Entfernen der Isolierkordel durch Erwärmung in Gang gesetzt. Die Erwärmung erfolgt im Bereich 1.1 bis 3.1 und auch im Bereich 1.2 bis 3.1 auf Schrumpftemperatur bis zum dicht schließenden Sitz auf diesen Flächen.
13. In der Position 9.0 wird durch mehrere Löcher in der Schrumpfmuffe der Abzweigung oberhalb der Verklebungsflächen am Umfang auf Stahlrohr trockenes Stickstoffgas zur Luftverdrängung eingespült. Das Stickstoffgas soll die Luft in dem Hohlraum zwischen dem Flansch 2.0 der Abzweigung und der Schrumpfmuffe 8.0 ersetzen. Die Luft soll dabei nach oben durch Ausgänge 10 an der Abzweigung entweichen. Stickstoffgas neigt weniger dazu durch die Abdichtung, insbesondere durch das Polyäthylen zu diffundieren als die anderen Bestandteile der Luft, nämlich als Kohlendioxid, Sauerstoff und Wasserdampf. Dadurch ist gewährleistet, daß das Stickstoffgas nicht ausdiffundiert und Luft eindiffundiert. Zugleich bildet das Stickstoffgas ein Inertmittel. Es schützt die Flächen des Stahlrohres vor der Korrosion.
14. Während des Spülvorganges/Luftverdrängungsvorganges wird an den Positionen 7.0 und 9.0 der Schrumpftopf von unten nach oben mittels Warmluft zum Schrumpfen und Andrücken von Hand und Verkleben gegeben, bis die letzte Luft in den oberen Ausgängen 10 entwichen ist.
15. Dann werden die oberen Luftausgänge 10 mit Bitumen-Oppananol Mischungen geschlossen.
16. Die Nachisolierung mit der gelochten Schrumpfmuffe setzt sich in der Befestigung in den beschriebenen Positionen auf dem Stahlrohr wie folgt fort:
17. Die Schrumpfmuffe auf dem Stahlrohr wird durch die Löcher 15.0 und 15.1 mit Stickstoffgas beaufschlagt. Dadurch wird im Raum 1.1 bis 9.0 und 1.3 bis 7.0 die Luft ausgespült, bis ein inertes Gasgemisch entstanden ist. Das inerte Gasgemisch ist dadurch gekennzeichnet, daß eine offene Flamme in dem Gasgemisch erlischt.
18. Nach der Inertisierung wird der Verklebungsvorgang der gelochten Schrumpfmuffe von Position 7.0 und 9.0 gleichzeitig von den Randzonen des Flansches aus eingeleitet und gleichzeitig die Räume zwischen 1.1 und 9.0 und 1.2 und 7.0 weiter durchspült und die zugehörigen Schrumpfmuffenaußenflächen durch Warmluft zum Schrumpfen und Verkleben gebracht, Position 14.
19. Bei Erreichen der Positionen 7.0 und 9.0 sowie den Positionen 15 und 15.1 wird durch Andrücken von Hand die letzte Spulgasmenge bzw. Inertgasmenge ggfs. auch die letzten wesentlichen Luftreste ausgedrückt und alle Positionen 7.0 und 9.0 und 15 und 15.1 verschlossen, wie in Position 13 auch die Position 17.
20. Beidseitig im Nachisolierungsbereich ist mit der bestehenden Isolierung am Stahlrohr eine Überlappung vorgesehen. Das betrifft die Bereiche zwischen den Isolierpunkten 3.1 zu 3.1 am Stahlrohr 1.0, ebenso dort zwischen 15.0 und 15.1 sowie zwischen den Punkten 7.0 und 9.0 bis zu den Punkten 10.0 beidseitig am aufgesetzten Flansch 2 . Dort ist eine 50%ig überlappende, selbstklebende PE-Folie mit einer Breite von 40 mm gewickelt. Die Foliendicke beträgt 0,25 mm
   Vorab darunter ist im Kreuzverband mit demselben Material schräg liegend über die Punkte 7.0 und 9.0 bis zu den Punkten 15.0 und 15.1 dieselbe Klebetechnik angewendet worden.
21. Die Wickeltechnik dient dem nochmaligen Verteilen von noch möglichen Gasresten unter der Isolierung. Das verringert die Korrosionsmöglichkeiten. Durch die geschilderten Gesamtmaßnahmen werden im Übergang von Schrumpfmuffe/Kleber und Stahloberfläche überall gleichmäßige Verklebungsverhältnisse geschaffen, wobei die Schrumpfmuffe/Kleber entweder schließend auf dem Stahlrohr bzw. schließend auf der Abzweigung aufliegen, so daß dort keine Gasreste oder nur unschädliche Reste von Stickstoffgas verblieben sind.
   Wahlweise werden auch andere Schrumpfmuffen aus Kunststoff verwendet. In jedem Fall ist die Kunststoffschicht der Schrumpfmuffe mindestens 1 mm oder größer. Wie oben erläutert, ist als Kunststoff PE mit einer Dichte von mindestens 0,926 Gramm pro Kubikzentimeter vorgesehen. Anstelle von EP kommen auch PP und andere Thermoplaste in Betracht.
   Um dieser Kunststoffschicht einen bleibenden
   Halt zu geben ist ein Schmelzkleber als Haftkleber vorgesehen. Die Haftkleber sind an sich bekannt.
   Nachstehend wird eine Schrumpfmuffe beschrieben, die aus einem 2-Schichtenkörper und 3 Eingängen zum Eingeben von Stickstoffgas, zum Durchspülen vor dem Verkleben, besteht bzw. 3 Ausgänge im oberen Bereich zum Luft-Abgang oder zum Abgang von Luft/Stickstoff-Gasgemisch besitzt.
22. Die Funktion der 2 aufeinander liegenden Schmelzkleberschichten mit und ohne organischen Farbstoffen, die bei 2 verschiedenen Tempraturen mit Luftsauerstoff Reaktionen zeigen, etwa bei plus 40 Grad Celsius und /oder plus 80 Grad Celsius. Die 2 verschiedenen Farbänderungen zeigen bleibend bei Ausfall der Isolierung nach dem Aufschneiden der Schrumpfmuffe den Ablauf und das Entstehen des Fehlers an. So wird der Isolierungsfehler zuordnungsbar, ob Verfahrensfehler oder Nutzungsfehler.
23. Das zusätzliche Anwenden eines Vakuums zwischen Stahlfläche und Muffe dient dazu, die Luft abzusaugen und das Spülen des Innenraumes mit Stickstoffgas zu erleichtern. Zusätzlich wird beim Schrumpfen der Haftschutz erhöht. Hierbei werden erstmalig Haftwerte erreicht, die in der werkseitigen Isolierproduktion des 3-Schichtenschutzes nach DIN-EN 10285 gefordert werden.
24. Der oben beschriebene Haftkleber besteht vorzugsweise aus Polyisobuthylen mittleren Molekulargewichtes von etwa 50.000 D oder etwa 10.000 D oder aus Mischungen von Materialien dieser Molekulargewichte. Ferner besteht der Haftkleber aus Hartparaffin zum besseren Gleiten (Verteilen) während der Herstellung der Schrumpfmuffe und während der Nutzung. Darüber hinaus ist Balsamharz ein Bestandteil des Haftklebers. Der Balsamharz dient der Erhöhung der Haftwirkung.
   Die Mischung kann die oben beschriebenen unterschiedlichen Anteile aufweisen. Im Ergebnis ist die erfindungsgemäße Schrumpfmuffe im Temperaturbereich von minus 30 Grad Celsius bis plus 50 Grad Celsius voll einsetzbar. Bei sorgfältiger Verarbeitung ist keine Kantenunterrostung der 3-Schichtenschutz-Enden auf dem Leitungsrohr zu fürchten.
   Die Kleberschicht hat vorzugsweise eine Schichtdicke von 0,15 bis 0,25 mm und wird auf die Innenseite der Schrumpfinuffe aufgetragen und durch Wärmezuführung aktiviert. Die Wärmezuführung kann von außen und/oder von innen erfolgen, bevorzugt mit Warmluft bzw. erwärmtem Inertgas. Durch die Erwärmung wird der Schmelzkleber plastifiziert und entwickelt der Schmelzkleber seine Haftwirkung.

In anderen Ausführungsbeispielen ist eine Schrumpfmuffe aus PP oder aus einem anderen Thermoplasten wie LDPE oder MDPE oder HDPE vorgesehen.
Die Betriebsdaten sind in der nachfolgenden Aufstellung zusammengetragen.
Dabei bezeichnet der Versuch "5 Erprobungsstufe" die oben beschriebene Handhabung einer PE-Schrumpfmuffe.
Alle angegebenen Temperaturen können in den Ausführungsbeispielen um plus oder minus 5 Grad Celsius von den angegebenen Werten abweichen.

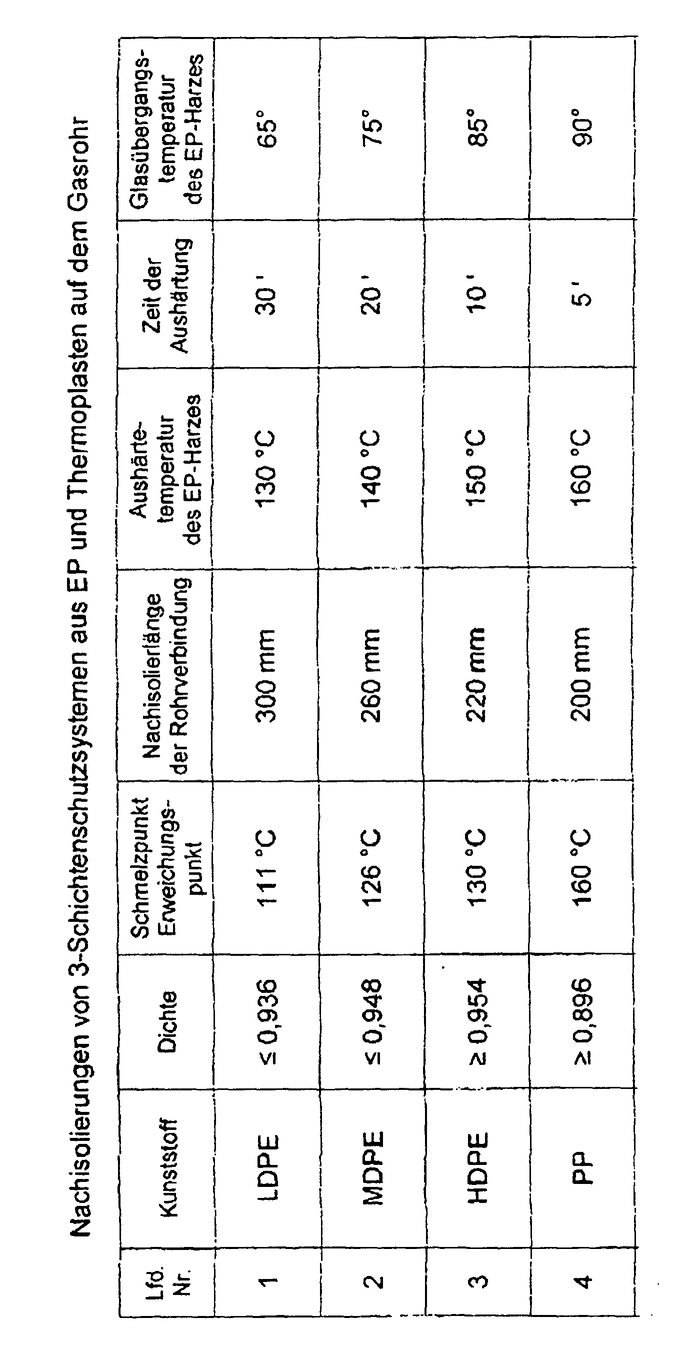

## Patentansprüche

1. Nachisolierung von insbesondere geschweißten Abzweigungen von Erdgasleitungen, wobei die Erdgasleitungen aus Stahlrohren mit einer Außenisolierung aus Kunststoff bestehen, wobei die Kunststoffisolierung vorzugsweise aus einem thermoplastischen Kunststoff besteht, noch weiter bevorzugt aus Polyäthylen, wobei die Kunststoffisolierung durch die Herstellung einer Abzweigung verletzt wird und anschließend saniert werden muß,
**gekennzeichnet durch**
die Anwendung von Schrumpfmuffen zur Isolierung, die **durch** Wärmeeinwirkung schrumpfen und dabei die Stahlrohre an der Abzweigung und überlappend an der unverletzten Außenisolierung dicht umschließen, wobei die Schrumpfmuffen der Abzweigung abgepaßt sind, wobei
a) die Schrumpfmuffen vorzugsweise aus vernetztem oder unvemetztem Polyäthylen bestehen
b) die Schrumpfmuffen mit einer Ausnehmung versehen sind, die so bemessen ist, daß nach dem Aufziehen der Schrumpfmuffe auf die Erdgasleitung ein Anschlußflansch oder ein Anschlußstutzen für die Abzweigung **durch** die Öffnung hindurch an der Erdgasleitung befestigt werden kann, oder
c) der Anschlußflansch oder Anschlußstutzen für die Abzweigung schon vor dem Aufziehen der Schrumpfmuffe an der Erdgasleitung befestigt wird und die Schrumpfmuffe über den Anschlußstutzen oder Anschlußflansch für die Abzweigung gezogen wird, wobei die Nachgiebigkeit der Schrumpfmuffe und der Anschlußflansch bzw. Anschlußstutzen so bemessen sind, daß die Schrumpfmuffe über die Erdgasleitung mit daran befestigtem Anschlußflansch oder Anschlußstutzen gezogen werden kann, oder
d) mehrteilige Schrumpfmuffen vorgesehen sind, deren Teile um die Abzweigung herum zusammengesetzt werden

2. Nachisolierung nach Anspruch 1, **dadurch gekennzeichnet, daß** die Schrumpfmuffen die Kunststoffisolierung überlappen, wobei das Überlappungsmaß vorzugsweise mindestens 10 mm und vorzugsweise höchstens 50mm beträgt und/oder die Schrumpfmuffen mit einer Kunststoffisolierung aus Polyäthylen kombiniert sind, deren Dichte mindestens 0,926 Gramm pro Kubikzentimeter und deren Dicke mindestens gleich 1 mm ist.

3. Nachisolierung nach Anspruch 1, **dadurch gekennzeichnet, daß** die Schrumpfmuffen im Bereich der Abzweigung mit Abstandshaltern versehen sind und dort im ungeschrumpften Zustand einen solchen Innendurchmesser aufweisen, daß bei einer durch die Öffnung hindurch erfolgenden Verschweißung des Anschlußflansches oder Anschlußstutzens keine unzulässige Erwärmung der aufgespreizten Schrumpfmuffe stattfindet.

4. Nachisolierung nach Anspruch 2, **gekennzeichnet durch** eingesetzte oder angeformte und lösbare Abstandshalter für die Schrumpfmuffen.

5. Nachisolierung nach einem der Ansprüche 2 bis 4, **gekennzeichnet durch** Anwendung einer weiteren, insbesondere als Schrumpfmuffentopf ausgebildeten Schrumpfmuffe für den Anschlußflansch oder Anschlußstutzen, wobei die weitere Schrumpfmuffe in die Öffnung der ersten Schrumpfmuffe einsetzbar ist oder auf der ersten Schrumpfmuffe befestigbar ist.

6. Nachisolierung nach Anspruch 5, **dadurch gekennzeichnet, daß** der Schrumpfmuffentopf eine Ausformung für den Anschlußflansch oder Anschlußstutzen besitzt und/oder einen Kragen besitzt und/oder an andere Schrumpfmuffenteile angeflanscht wird und/oder durch eine Öffnung in einem anderen Schrumpfmuffenteil ragt, insbesondere mit dem Kragen unter das andere Schrumpfmuffenteil greift.

7. Nachisolierung nach einem der Ansprüche 1 bis 5, **dadurch gekennzeichnet, daß** die Schrumpfmuffen aus einem Teil oder aus mehreren Teilen bestehen und um die Erdgasleitung und/oder die Abzweigung hemm formbar oder zusammensetzbar ist, wobei die Teile Formteile und/oder Folien und/oder Bänder sein können und wobei alle Teile oder einzelne Teile schrumpffähig sind.

8. Nachisolierung nach einem der Ansprüche 1 bis 7, **dadurch gekennzeichnet, daß** die Schrumpfmuffenteile bzw. Schrumpfmuffen miteinander verschweißt oder verklebt sind.

9. Nachisolierung nach einem der Ansprüche 1 bis 8, **dadurch gekennzeichnet, daß** die Schrumpimuffen ganz oder teilweise unmittelbar oder mittelbar mit dem Stahlrohr und/oder der Abzweigung verklebt sind.

10. Nachisolierung nach einem der Ansprüche 1 bis 9, **dadurch gekennzeichnet, daß**
a) Stahlrohre mit einem mehrschichtigen Isolierungsaufban verwendet werden, wobei unmittelbar auf dem Stahlrohr eine EP-Schicht vorgesehen ist, und wobei die Isolierung an der Rohrverbindung und/oder der Abzweigung nur bis auf die EP-Schicht durchtrennt und abgeschält wird und daß die EP-Schicht in einem Überlappungsbereich der bisherigen Isolierung und der Schrumpfmuffe verbleibt, und
b) zum Verkleben der Schrumpfmuffe zusätzlicher Kleber zwischen der Schrumpfmuffe und dem Stahlrohr bzw. seiner verbliebenen Isolierung im Überlappungsbereich mit der Schrumpfmuffe vorgesehen ist oder
c) eine an der Berührungsfläche selbst klebefähige Schrumpfmuffe oder an der Berührungsfläche selbst klebefähige Schrumpfmuffenteile verwendet werden.

11. Nachisolierung nach einem der Ansprüche 1 bis 10, **gekennzeichnet durch** Schrumpfmuffen oder Schrumpfmuffenteile, die an den Berührungsflächen mit dem Rohr und/oder der Abzweigung bei Schrumpftemperatur klebefähig sind oder kalt klebefähig sind, wobei die kalt klebefähigen Berührungsflächen bis zur Schrumpfmuffenmontage mit einer Trennfolie oder Schutzfolie abgedeckt sind.

12. Nachisolierung nach einem der Ansprüche 1 bis 11, **dadurch gekennzeichnet, daß** die Schrumpfmuffe mit einer Temperaturanzeige versehen ist.

13. Nachisolierung Anspruch 12, **dadurch gekennzeichnet, daß** die Schrumpfmuffen zur Temperaturanzeige zumindest teilweise mit einem chemischen oder organischen und temperaturinstabilen Farbstoff beschichtet ist, wobei der Temperaturinstabilitätspunkt unterhalb der Grenze der Warmfestigkeit der Schrumpfmuffen liegt und wobei der Farbstoff bei weitergehender Erwärmung seine Farbe ändert.

14. Nachisolierung nach Anspruch 13, **gekennzeichnet durch** einen Farbstoff an den Schrummpfmuffen, der unter Anwesenheit von Sauerstoff bei Erreichen des Temperaturinstabilitätspunktes seine Farbe ändert.

15. Nachisolierung nach Anspruch 13 oder 14, **dadurch gekennzeichnet, daß** die instabile Farbschicht an den Schrumpfmuffen nach der Farbänderung bei anschließender Abkühlung die Farbänderung behält

16. Nachisolierung nach einem der Ansprüche 13 bis 15, **dadurch gekennzeichnet, daß** die instabile Farbschicht an den Schrumpfmuffen ein Polyisobuthylen ist.

17. Nachisolierung nach einem der Ansprüche 13 bis 16, **gekennzeichnet durch** mindestens zwei Polyisobuthylenmaterialien als instabile Farbschicht an den Schrumpfmuffen, die sich in ihrem Mol.Gew. voneinander unterscheiden, wobei der Unterschied mindestens 10.000 D, vorzugsweise mindestens 30.000 D und noch weiter bevorzugt mindestens 50.000 D beträgt.

18. Nachisolierung nach einem der Ansprüche 13 bis 17, **dadurch gekennzeichnet, daß** die Instabilitätstemperatur der Farbschicht an den Schrumpfmuffen auf die Grenze der Warmfestigkeit der vorzugsweise thermoplastischen Kunststoffisolierung und/oder auf die Schrumpftemperatur und/oder auf die Spülgastemperatur ausgelegt ist, wobei im Falle der Auslegung auf die Schrumpftemperatur oder auf die Spülgastemperatur eine Farbänderung bei vorhandenem Sauerstoff, insbesondere Luftsauerstoff vorgesehen ist.

19. Nachisolierung nach einem der Ansprüche 13 bis 18, **dadurch gekennzeichnet, daß** die Farbschicht an den Schrumpfmuffen zugleich eine Kleberschicht an den Schrumpfmuffen bildet und/oder vorzugsweise eine Dicke von 0,15 mm bis 0,25 mm hat.

20. Nachisolierung nach einem der Ansprüche 1 bis 19, **gekennzeichnet durch** Anschlüsse und/oder Öffnungen an den Schrumpfmuffen für Spülgasleitungen und/oder Evakuierungsleitungen

21. Nachisolierung nach Anspruch 20, **gekennzeichnet durch** verschließbare Anschlüsse und/oder Öffnungen an den Schrumpfmuffen.

22. Nachisolierung nach Anspruch 21 oder 22, **dadurch gekennzeichnet, daß** mehrere Zuleitungen und/oder Ableitungen für Spülgas verteilt an den Schrumpfmuffen vorgesehen sind.

23. Nachisolierung nach einem der Ansprüche 20 bis 22, **dadurch gekennzeichnet, daß** sich in den verschiedenen Zuleitungen Ventile oder Schieber befinden.

24. Nachisolierung nach einem der Ansprüche 20 bis 23, **gekennzeichnet durch** schlitzförmige Öffnungen mit einem Lappen, der die Öffnungen in der Schließfunktion überdeckt und mit den Schrumpfmuffen verklebt oder verschweißt ist.

25. Nachisolierung nach einem der Ansprüche 20 bis 24, **gekennzeichnet durch** Dichtmittel in den verschlossenen Rohren und Öffnungen an den Schrumpimuffen.

26. Nachisolierung nach einem der Ansprüche 1 bis 25, **dadurch gekennzeichnet, daß** die Hohlräume zwischen Schrumpfmuffen und Stahlrohr vor dem Schrumpfen und/oder bei dem Schrumpfen evakuiert werden und/oder mit einem Inertgas, vorzugsweise mit getrocknetem Stickstoffgas, gefüllt werden.

27. Nachisolierung nach Anspruch 26, **dadurch gekennzeichnet, daß** durch Evakuierung der Schrumpfmuffen in dem Zwischenraum zwischen Leitungsrohr bzw. Abzweigung und Schrumpfmuffen vorzugsweise mindestens ein Unterdruck von 0,3 bar, noch weiter bevorzugt ein Unterdruck von mindestens 0,5 bar und höchst bevorzugt ein Unterdruck von mindestens 0,7bar erzeugt wird.

28. Nachisolierung nach Anspruch 26 oder 27, **dadurch gekennzeichnet, daß** die Dichtigkeit der Schrumpfmuffenumschließung an der Erdgasleitung bzw. an der Abzweigung kontrolliert wird.

29. Nachisolierung nach einem der Ansprüche 26 bis 28, **dadurch gekennzeichnet, daß** über eine Zeitdauer ein Unterdruck an die Schrumpfmuffen ohne weitere Absaugung angelegt wird und die Veränderung des Unterdruckes gemessen wird.

30. Nachisolierung nach einem der Ansprüche 26 bis 29, **gekennzeichnet durch** Bespülen der Hohlräume mit Inertgas.

31. Nachisolierung nach Anspruch 30, **gekennzeichnet durch** die Verwendung von Schrumpfmuffen mit Eintrittsöffnungen für Inertgas und Austrittsöffnungen für Luft und Spülgas.

32. Nachisolierung nach Anspruch 30 oder 31, **gekennzeichnet durch** Herausdrücken des Inertgases beim Schrumpfen und Verschließen von Ein- und Austrittsöffnungen nach Beendigung des Schrumpfens.

33. Nachisolierung nach einem der Ansprüche 30 bis 32, **dadurch gekennzeichnet, daß** in den Abgang des Spülgases zur Kontrolle ausreichender Spülung eine offene Flamme gehalten wird.

34. Nachisolierung nach einem der Ansprüche 26 bis 33, **dadurch gekennzeichnet, daß** die Erwärmung der Schrumpfmuffen auf Schrumpftemperatur zusammen mit der Beaufschlagung der Schrumpfmuffen mit Spülgas erfolgt.

35. Nachisolierung nach Anspruch 34, **gekennzeichnet durch** eine Erwärmung des Spülgases in einem Wärmetauscher.

36. Nachisolierung nach einem der Ansprüche 26 bis 35, **dadurch gekennzeichnet, daß** die Schrumpfung an den Schrumpfmuffen gleichmäßig oder ungleichmäßig erfolgt.

37. Verfahren nach Anspruch 36, **gekennzeichnet durch** eine unterschiedliche Zuführung und/oder Ableitung erwärmten Spülgases an den verschiedenen Schrumpfmuffenteilen und/oder unterschiedliche Erwärmung des Spülgases für verschiedene Spülgaszuführungen.

38. Verfahren nach einem der Ansprüche 1 bis 37, **gekennzeichnet durch** Schrumpfmuffen aus PE oder PP oder einem anderen Thermoplasten wie LDPE oder MDPE oder HDPE.

39. Verfahren nach Anspruch 38, **dadurch gekennzeichnet, daß** das EP pulverförmig auf die Beschichtungsfläche aufgebracht und aufgeschmolzen wird.

40. Verfahren nach Anspruch 39, **dadurch gekennzeichnet, daß** das EP aufgeblasen wird und an der Beschichtungsfläche klebt, so daß es bis zum Aufschmelzen nicht abfällt

41. Verfahren nach einem der Ansprüche 38 bis 40, **dadurch gekennzeichnet, daß** die Beschichtungsfläche erwärmt wird und/oder erwärmtes Pulver aufgeblasen wird und/oder das Trägergas für das Aufblasen erwärmt ist.

42. Verfahren nach einem der Ansprüche 38 bis 41, **gekennzeichnet durch** Pulver mit einer Korngröße kleiner 0,3 mm, vorzugsweise einer Korngröße kleiner 0,1 mm und noch weiter bevorzugt einer Korngröße bis 0,05 mm.

43. Verfahren nach einem der Ansprüche 38 bis 42, **dadurch gekennzeichnet, daß**
a) die Aushärtungstemperatur für des EP-Pulvers 130 bis 200 Grad Celsius, vorzugsweise 160 bis 180 Grad Celsius, beträgt, wobei die Temperatur um plus oder minus 10%, vorzugsweise um plus oder minus 5%, von der angegebenen Temperatur abweichen kann und/oder
b) die Aushärtezeit 2 bis 30 min, vorzugsweise 2 bis 5 min beträgt, wobei die Aushärtezeit um plus oder minus 10%, vorzugsweise um plus oder minus 5%, von der angegebenen Zeit abweichen kann und/oder
c) die Glasübergangstemperatur des EP-Pulvers 65 bis 90 Grad Celsius beträgt, wobei die Temperatur um plus oder minus 10%, vorzugsweise um plus oder minus 5%, von der angegebenen Temperatur abweichen kann und/oder
d) als Muffenmaterial LDPE mit einem Erweichungspunkt von 111 Grad Celsius verwendet wird, wobei die Temperatur um plus oder minus 10%, vorzugsweise um plus oder minus 5%, von der angegebenen Temperatur abweichen kann oder als Muffenmaterial MDPE mit einem Erweichungspunkt von 126 Grad Celsius verwendet wird, wobei die Temperatur um plus oder minus 10%, vorzugsweise um plus oder minus 5% von der angegebenen Temperatur abweichen kann oder als Muffenmaterial HDPE mit einem Erweichungspunkt von 130 Grad Celsius verwendet wird, wobei die Temperatur um plus oder minus 10%, vorzugsweise um plus oder minus 5% von der angegebenen Temperatur abweichen kann oder als Muffenmaterial PP mit einem Erweichungspunkt von 160 Grad Celsius verwendet wird, wobei die Temperatur um plus oder minus 10%, vorzugsweise um plus oder minus 5% von der angegebenen Temperatur abweichen kann oder als Muffenmaterial PE verwendet wird.

44. Verfahren nach einem der Ansprüche 38 bis 43, **dadurch gekennzeichnet, daß** die Überlappung an einem Rohrende bzw. an einer Abzweigung
a) bei Verwendung von LDPE für die Schrumpfmuffe eine Länge von 300 mm besitzt, wobei die Länge um 40%, vorzugsweise um 20%, noch weiter bevorzugt um 10% von der angegebenen Länge abweichen kann
b) bei Verwendung von MDPE für die Schrumpfmuffe eine Länge von 260 mm besitzt, wobei die Länge um 40%, vorzugsweise um 20%, noch weiter bevorzugt um 10% von der angegebenen Länge abweichen kann
c) bei Verwendung von HDPE für die Schrumpfmuffe eine Länge von 220 mm besitzt, wobei die Länge um 40%, vorzugsweise um 20%, noch weiter bevorzugt um 10% von der angegebenen Länge abweichen kann
d) bei Verwendung von PP für die Schrumpfmuffe eine Länge von 200 mm besitzt, wobei die Länge um 40%, vorzugsweise um 20%, noch weiter bevorzugt um 10% von der angegebenen Länge abweichen kann
e) bei Verwendung von PE für die Schrumpfmuffe eine Länge von 100 mm besitzt, wobei die Länge um 40%, vorzugsweise um 20%, noch weiter bevorzugt um 10% von der angegebenen Länge abweichen kann
